# EUROPÄISCHE PATENTSCHRIFT

(11) **EP 4 196 687 B1**
(45) Veröffentlichungstag und Bekanntmachung des Hinweises auf die Patenterteilung: **09.12.2026**
(21) Anmeldenummer: 21801515.4
(22) Anmeldetag: 27.10.2021
(51) Int. Cl.: F15B 13/02, F15B 13/04, F16K 17/04, G05D 16/20

(54) **VENTIL**
VALVE
SOUPAPE

(30) Priorität: 20.11.2020 DE 102020007098
(43) Veröffentlichungstag der Anmeldung: 21.06.2023
(73) Patentinhaber: Hydac Fluidtechnik GmbH, 66280 Sulzbach/Saar (DE)
(72) Erfinder: BILL, Markus, 66571 Eppelborn (DE); HILZENDEGEN, Philipp, 66687 Wadern (DE); PORTA, Nicola-Vincenzo, 66538 Neunkirchen (DE)
(74) Vertreter: Bartels und Partner, Patentanwälte
(86) Internationale Anmeldenummer: PCT/EP2021/079837
(87) Internationale Veröffentlichungsnummer: WO 2022/106168

(56) Entgegenhaltungen:
- DE-A1- 102019 202 256
- US-A1- 2005 097 887

## Beschreibung

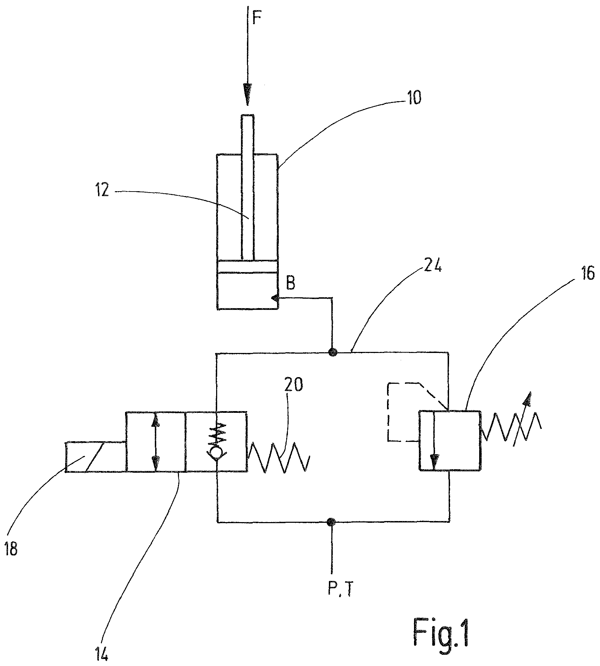

Die Erfindung betrifft ein Ventil, insbesondere in Form eines 2/2-Wege-Sitzventiles. Solche Ventile respektive Sitzventile dienen regelmäßig dem Ansteuern von hydraulischen Zylindern zwecks Bewegen und Halten von Lasten. Wird das Ventil geschlossen, nimmt dieses also eine fluidsperrende Position ein, hält der jeweils angeschlossene Hydraulikzylinder seine Position, auch wenn der hydraulische Zylinder mit einer Last beaufschlagt ist. Schließt hingegen ein solches Ventil respektive Sitzventil das in den Zylindern und Zuleitungen befindliche Ölvolumen über längere Zeiträume ab, kann durch thermische Einwirkung, insbesondere unter Einfluss der Sonneneinstrahlung der Druck weit über den zulässigen Systemdruck ansteigen, sodass in Folge Schäden an Systemkomponenten, wie etwa den Hydraulikschläuchen, entstehen. Dies spielt insbesondere dann eine Rolle, wenn das Hydrauliksystem bei Arbeitsmaschinen Anwendung findet, die im Freien betrieben werden, wie beispielsweise Baggern oder landwirtschaftlichen Fahrzeugen. Um diesem Problem zu begegnen, ist im frei zugänglichen Stand der Technik (s. Fig. 1) vorgeschlagen worden, ein Druckbegrenzungsventil parallel zu einem (Steuer-)Ventil zu schalten. Das Druckbegrenzungsventil muss dabei derart eingestellt werden, dass ein Öffnen und Ablassen von Druck zum Tank oberhalb des Systemdruckes erfolgen kann. Da der beschriebene Druckanstieg auf der thermischen Ausdehnung des Ölvolumens basiert, bewegt sich die abzuführende Ölmenge im Bereich einer kleinen Fluidmenge, regelmäßig im Bereich von wenigen Tropfen. Es treten somit nur kleinste zu beherrschende Volumenströme auf.

Im Stand der Technik (s. Fig. 1) haben sich demgemäß Lösungsansätze durchgesetzt, bei denen zum Ein- und Ausfahren hydraulischer Abstützzylinder sogenannte 2/2-Wegeventile verwendet werden. Dabei gewährleistet das Ventil in betätigter Stellung einen Fluidfluss, sowohl zum Zylinder als auch aus diesem wieder heraus. In Ruhestellung schließt es das Fluidvolumen ein und verhindert somit ein Absinken der auf den Zylinder wirkenden Kraft. Bei dieser bekannten Lösung wird eine thermische Überdrucksicherung dadurch realisiert, dass das Druckbegrenzungsventil, wie bereits dargelegt, parallel zum Wegeventil geschaltet ist. Aufgrund der geringen abzuführenden Fluidmenge als auch des großen Abstandes von Ansprechdruck zum Systemdruck, werden an dieses Druckbegrenzungsventil keine hohen Anforderungen hinsichtlich der Genauigkeit gestellt. Nachteilig bei der bekannten Lösung ist jedoch der zusätzlich benötigte Bauraum für das Druckbegrenzungsventil sowie die Notwendigkeit, ein zusätzliches Bauteil als solches für die hydraulische Betätigungsschaltung vorzusehen, was wiederum das Einsatzgewicht der bekannten Lösung erhöht.

Die DE 10 2019 202 256 A1 beschreibt ein Ventil, insbesondere in Form eines 2/2-Wege-Sitzventiles, wobei zur Realisierung einer thermischen Überdrucksicherung in einen gemeinsamen Ventilkörper eine Druckbegrenzungsfunktion integriert ist, wobei der Ventilkörper mindestens eine Einströmbohrung und eine Ausströmbohrung aufweist, die mittels eines Ventilkolbens, der von einem Magnetsystem ansteuerbar ist, miteinander fluidführend verbindbar oder voneinander trennbar sind, wobei der Ventilkolben zwei Blendenbohrungen aufweist, von denen die eine als feste und die andere als variable Blende ausgebildet ist, und wobei das Magnetsystem einen in einem Polrohr längsverfahrbar gelagerten Ankerkolben aufweist, der von einer bestrombaren Magnetspule elektromechanisch betätigt den Ventilkolben von einem Ventilsitz in einem Ventilgehäuse als Teil des Ventilkörpers abhebt und einen Fluidweg von einer Einström- zu einer Ausströmbohrung freigibt.Weitere Ventile gehen aus der US 2005/0097887 A1, der DE 10 2015 007 689 A1, der DE 10 2013 002 794 A1, der DE 103 25 178 A1, der DE 10 2011 010 474 A1 und der DE 10 2007 011 127 A1 hervor. Ausgehend von diesem Stand der Technik liegt der Erfindung die Aufgabe zugrunde, die beschriebenen Nachteile im Stand der Technik zu vermeiden.

Erfindungsgemäß ist diese Aufgabe durch ein Ventil mit den Merkmalen des Patentanspruches 1 in seiner Gesamtheit gelöst.

Gemäß Anspruch 1 ist vorgesehen, dass die variable Blende von einer Steuerstange angesteuert ist, die an ihrem einen freien Ende einen Steuerkegel aufweist, mit dem der freie Öffnungsquerschnitt der variablen Blende vorgebbar ist, und dass der Ankerkolben über ein zusätzlich zu der Steuerstange vorhandenes Gestängeteil bewegbar ist, das aus einem druckbeaufschlagten Bereich des im Ventilgehäuse und dem Polrohr als weiterem Teil des Ventilkörpers eingeschlossenen Fluidvolumens herausgeführt ist und das entgegen der Wirkung eines Energiespeichers, insbesondere in Form einer Druckfeder, bewegbar ist.

Dadurch, dass zur Realisierung einer thermischen Überdrucksicherung in einen gemeinsamen einzigen Ventilkörper eine Druckbegrenzungsfunktion integriert ist, wird mit nur einem Ventil sowohl die Steuerfunktion als auch die Druckbegrenzungsfunktion, vorzugsweise für einen an das Ventil anschließbaren hydraulischen Zylinder, verwirklicht. Dies hat so keine Entsprechung im Stand der Technik.

Durch Wegfall eines eigenständigen Druckbegrenzungsventils neben dem Steuerventil, regelmäßig in Form eines 2/2-Wege-Sitzventiles, wie im Stand der Technik aufgezeigt, lassen sich Gewicht und Kosten sparen und die ansonsten zusätzlich benötigte Verrohrung zwischen Wege-Sitzventil und Druckbegrenzungsventil entfällt. Insoweit sind auch die einer thermischen Beanspruchung ausgesetzten Leitungsabschnitte von ihrer Länge her reduziert, was der Betriebssicherheit des erfindungsgemäßen Ventils entgegenkommt.

Der Ventilkörper weist mindestens eine Einströmbohrung und eine Ausströmbohrung auf, die mittels eines Ventilkolbens, der von einem Magnetsystem ansteuerbar ist, miteinander fluidführend verbindbar oder voneinander trennbar sind. Dergestalt lässt sich das Ventil unabhängig von seiner Druckbegrenzungsfunktion mittels des Magnetsystems sicher ansteuern, d. h. zum Herstellen einer Fluidverbindung und zum Sperren derselben als Steuerventil betreiben.

Der Ventilkolben weist zwei Blendenbohrungen auf, von denen die eine als feste und die andere als variable Blende ausgebildet ist. Dabei ist vorgesehen, dass die variable Blende von der Steuerstange angesteuert ist, die an ihrem einen freien Ende den Steuerkegel aufweist, mit dem der freie Öffnungsquerschnitt der variablen Blende vorgebbar ist.

Öffnet die variable Blende, etabliert sich ein über beide Blenden fließender Volumenstrom, der wiederum einen Druckabfall in Strömungsrichtung hinter der Blende generiert und unter der Voraussetzung eines sich einstellenden Gleichgewichtszustandes der auf den Ventilkolben einwirkenden Druckkräfte und der durch die Blenden fließenden Volumenströme, folgt der Ventilkolben der Führungsstange und das Ventil gelangt in seinen geöffneten Zustand. Darüber hinaus stellt sich ein sich variierender Öffnungsquerschnitt an der variablen Blende ein, was zu einem guten Ansteuerverhalten führt.

Das Magnetsystem weist einen in einem Polrohr längsverfahrbar gelagerten Ankerkolben auf, der von einer bestrombaren Magnetspule elektromechanisch betätigt den Ventilkolben von einem Ventilsitz in einem Ventilgehäuse als Teil des Ventilkörpers abhebt und einen Fluidweg von einer Einström- zu einer Ausströmöffnung freigibt. Dergestalt ist mit einfachen Mitteln bei einem geringen Energieeintrag eine elektromechanische Betätigung des Ventils unabhängig von seiner Druckbegrenzungsfunktion in jedem Fall gewährleistet. Ermöglicht wird dies durch ein Gestängeteil, das an seinem einen freien Ende in ein im Magnetanker aufgenommenes Mitnehmersystem übergeht, dessen freies Ende mit einem vorgebbaren axialen Bewegungsspiel im Magnetanker längsverfahrbar aufgenommen ist. Dergestalt erlaubt das Mitnehmersystem eine Bewegung nur in eine Verschiebungsrichtung des Ventils.

Der Ankerkolben ist über das zusätzlich zu der Steuerstange vorhandene Gestängeteil bewegbar, das aus dem druckbeaufschlagten Bereich des im Ventilgehäuse und dem Polrohr als weiterem Teil des Ventilkörpers eingeschlossenen Fluidvolumens herausgeführt ist und das entgegen der Wirkung eines Energiespeichers, insbesondere in Form einer Druckfeder, bewegbar ist. Der Durchmesser des Gestängeteils bildet hierbei eine druckwirksame Fläche aus, deren Kraft entgegen dem Energiespeicher respektive der Druckfeder wirkt und dadurch, dass vorzugsweise das Gestängeteil mechanisch fest mit einem Federteller verbunden ist, an dem sich der Energiespeicher in Form der Druckfeder mit seinem einen freien Ende abstützt, wirkt die Druckfeder den beschriebenen auf dem Gestänge lastenden Druckkräften entgegen, welche sich aus dem Systemdruck wie auch in etwaig entstandenem Überdruck zusammensetzt. Vorzugsweise ist dabei der Federteller und die Druckfeder in einem Polkern, also einem weiteren Teil des Ventilkörpers, aufgenommen, der sich in Verlängerung an das Polrohr anschließt. Dergestalt kann vorzugsweise der mit dem Gestängeteil verbundene Federteller mit einer Möglichkeit der manuellen Betätigung versehen werden, um neben der elektrischen und hydraulischen Betätigungsart auch eine mechanische für das Ventil vorzusehen.

Bei einer weiteren bevorzugten Ausführungsform des erfindungsgemäßen Ventils ist vorgesehen, dass das freie Ende der Steuerstange, das dem Steuerkegel gegenüberliegt, mit einem vorgebbaren axialen Bewegungsspiel im Magnetanker längsverfahrbar geführt ist. Dergestalt lässt sich das Ventil funktionssicher ansteuern und nur bei einer definierten Betätigungssituation öffnet der Magnetanker über die Steuerstange die variable Blende im Ventilkolben.

Als besonders bevorzugt hat es sich herausgestellt, das vorstehend beschriebene Ventil bei hydraulischen Systemen mit mindestens einem mit Last beaufschlagbaren Hydraulikzylinder einzusetzen, dessen Kolbenseite einer Kolben-Stangen-Einheit an die Einströmbohrung im Ventilkörper des Ventils angeschlossen ist. Dergestalt lässt sich der jeweilige Hydraulikzylinder sicher ansteuern und gleichzeitig mit nur einem Ventil eine Druckminderfunktion erreichen.

Im Folgenden wird das erfindungsgemäße Ventil anhand eines Ausführungsbeispiels nach der Zeichnung näher erläutert. Dabei zeigen in prinzipieller und nicht maßstäblicher Darstellung die
- Fig. 1: in der Art eines hydraulischen Schaltplanes den einschlägigen Stand der Technik;
- Fig. 2a: einen Längsschnitt durch den unteren Teil des erfindungsgemäßen Ventils, ohne die Spulenwicklung des zugehörigen Magnetsystems; und
- Fig. 2b: einen Längsabschnitt durch den oberen Teil des Ventils, wobei nachfolgend die Fig. 2a, b als Fig. 2 als Ganzes bezeichnet sind.

Die Fig. 1 zeigt in wesentlichen Teilen ein hydraulisches Gesamtsystem mit einem hydraulischen Arbeitszylinder respektive Hydraulikzylinder 10. Der Hydraulikzylinder 10 weist in üblicher Weise eine Kolben-Stangen-Einheit 12 auf, die mit einer Kraft beaufschlagbar ist, beispielsweise in Form einer Gewichtskraft, was mit dem Kraftpfeil F angedeutet werden soll. Auf seiner Kolbenseite ist der Hydraulikzylinder 10 über eine Anschlussstelle B und entsprechende Verbindungsleitungen zum einen mit einem 2/2-Wege-Sitzventil 14 und zum anderen mit einem Druckbegrenzungsventil 16 fluidführend verbunden. Während die Ventile 14, 16 also auf ihrer Ausgangsseite an den Hydraulikzylinder 10 angeschlossen sind, sind diese genannten Ventile auf ihrer Eingangsseite an eine Druckversorgungsquelle P, beispielsweise in Form einer Hydropumpe, sowie mit einem Tankanschluss T wahlweise verbindbar.

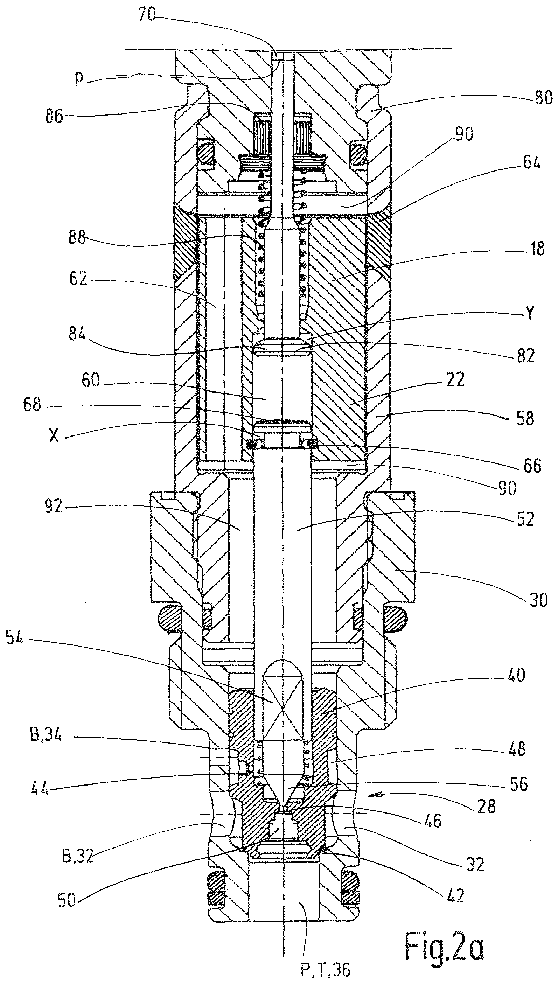

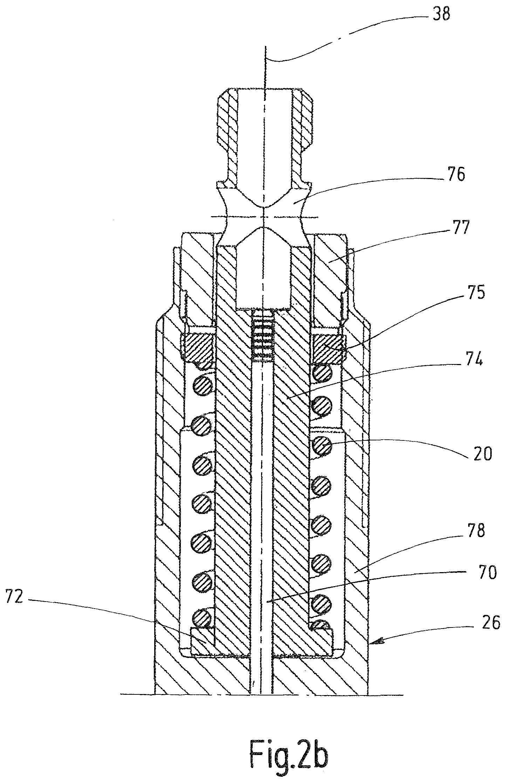

Das 2/2-Wege-Sitzventil 14 ist in seiner geschlossenen Stellung gezeigt und die Kolbenseite des Hydraulikzylinders 10 als hydraulischer Abstützzylinder kann sich auch unter einer Last F gegenüber dem Ventil 14 derart abstützen, dass es nicht zu einem ungewollten Einfahren des Zylinders 10 kommen kann. Wird hingegen das Ventil 14 mittels eines Magnetsystems 18 entgegen der Wirkung eines Energiespeichers regelmäßig in Form einer Druckfeder 20 geschaltet, wird die Kolbenseite über den Anschluss B des Zylinders 10 im Bedarfsfall mit einem Fluidvolumen vorgebbaren Druckes von Seiten der Druckversorgung P versorgt und die Kolben-Stangen-Einheit 12 des Hydraulikzylinders 10 fährt in Blickrichtung auf die Fig. 1 gesehen, entgegen dem Kraftpfeil F nach oben bis zu einer oberen Anschlagstellung aus. Die Kolben-Stangen-Einheit 12 kann auch bei unbestromtem Wegesitzventil ausfahren, da es in der Grundstellung, also unbestromt, eine Rückschlagfunktion von Anschluss 36 zu Anschluss 32 beinhaltet (vgl. Fig. 2). Ist hingegen die Eingangsseite des geschalteten Ventils 14 mit dem Tankanschluss T, respektive mit einem daran angeschlossenen Tank, bedarfsweise verbunden, entleert sich das Fluidvolumen auf der Kolbenseite des Zylinders 10, der daraufhin in Blickrichtung auf die Fig. 1 gesehen nach unten hin einfährt. Was in der Fig. 1 nicht näher dargestellt ist, kann die Eingangsseite des Ventils 14 also einmal an die Druckversorgung P und einmal an den Tank T angeschlossen sein, wozu ein weiteres Ventil (nicht dargestellt) eingesetzt werden kann.

Das Magnetsystem 18 zum Betätigen des Ventils 14 verfügt in üblicher Weise über eine nicht näher dargestellte bestrombare Spule, bei deren Bestromung ein Magnetanker oder Ankerkolben 22 (s. Fig. 2) verfahren wird und dabei das Ventil 14 in seine durchgeschaltete Öffnungsstellung bringt. Bei nicht bestromtem Magnetsystem 18 wird der Ankerkolben 22 hingegen über die Druckfeder 20 wieder in seine in der Fig. 1 gezeigte Sperr-Ausgangsstellung zurückgebracht.

Wie bereits dargelegt, kann es in den eine Verrohrung 24 bildenden Fluidleitungen zwischen den Ventilen 14, 16 und dem Zylinder 10 bei nicht geschaltetem Ventil 14 und mithin eingespannter Ölsäule bei einem Temperaturanstieg, beispielsweise bedingt durch Sonneneinstrahlung, zu einer ungewollten Ausdehnung des Ölvolumens und infolge dessen zu einem Druckanstieg kommen, was zu Schäden an der Verrohrung 24 führen kann. Um dem zu begegnen, ist parallel zu dem Ventil 14 in den hydraulischen Versorgungskreislauf für den Zylinder 10 das Druckbegrenzungsventil 16 geschaltet, das bei einem vorgebbaren Schwellendruck öffnet und überflüssiges Fluidvolumen an den insoweit freigegebenen Tankanschluss T abgibt. Aufgrund der geringen abzuführenden Fluidmenge als auch des großen Abstandes vom Ansprechdruck zum Systemdruck, werden an das Druckbegrenzungsventil 16 nach dem Stand der Technik keine hohen Anforderungen an die Einstellgenauigkeit, aber hohe Anforderungen an die Schließhysterese, gestellt. Die Druckbegrenzungsfunktion des Ventils muss nach dem Abbau des Überdrucks wieder leckagefrei schließen, um ein langsames Absenken der Last zu verhindern. Der beschriebene Druckanstieg aufgrund der thermischen Ausdehnung des Ölvolumens in der Verrohrung 24 bewegt sich für die abzuführende Ölmenge über das Druckbegrenzungsventil 16 in Richtung des Tanks T im Bereich von wenigen Öltropfen. Mithin braucht das Druckbegrenzungsventil 16 nach dem Stand der Technik nur kleinste Volumenströme zu beherrschen. Sitzventile anstelle üblicher Wegeventile zu verwenden ist sinnvoll, da über den Ventilsitz des Ventilkolbens auch hohe Beanspruchungskräfte F am Zylinder 10 bei nichtgeschaltetem Ventil 14 sicher beherrschbar bleiben. Insbesondere ist Sitzventilen gegenüber Schieberventilen der Vorzug zu geben, da ansonsten bedingt durch die typische Leckage von Schieberventilen ein langsames Absenken der Last verursacht würde.

Das in der Fig. 2 im Längsschnitt gezeigte erfindungsgemäße Ventil ist in Form eines solchen 2/2-Wege-Sitzventiles 14 nach der Fig. 1 ausgestaltet. Zur Realisierung einer thermischen Überdrucksicherung weist das Ventil nunmehr in einem gemeinsamen Ventilkörper 26 eine integrierte Druckbegrenzungsfunktion auf, die als Ganzes mit 28 bezeichnet ist. Insoweit sind bei der erfindungsgemäßen Lösung die bekannten Ventile 14, 16 nach der Fig. 1 in einem gemeinsamen Ventilkörper 26 miteinander zusammengefasst. Als Teil des Ventilkörpers 26 ist ein Ventilgehäuse 30 vorhanden, das sich in üblicher und daher nicht näher dargestellten Art und Weise in einen Ventilblock (nicht dargestellt) einschrauben lässt, wobei das Ventilgehäuse 30 neben der hierfür vorgesehenen Gewindestrecke auch außenumfangsseitig über entsprechende ringförmige Dichtsysteme für den dahingehenden Einbau verfügt.

Das Ventilgehäuse 30 weist ferner Einströmbohrungen 32, 34 sowie eine Ausströmbohrung 36 auf. Die zur Längsachse 38 des Ventiles diametral einander gegenüberliegenden Einströmbohrungen 32 weisen einen größeren Durchmesser als die in Blickrichtung auf die Fig. 2 gesehene darüberliegende einzelne Einströmbohrung 34 auf, die im Bedarfsfall auch mehrfach um den Außenumfang des Ventilgehäuses 30 verteilt sein kann. Die radial in das Ventilgehäuse 30 eingebrachten Einströmbohrungen 32, 34 stehen mit dem Zylinderanschluss B (Fig. 1) in Verbindung, dessen Fluidzuführung zu den Einströmbohrungen 32, 34 im Ventilblock realisiert ist. An ihrer unteren Stirnseite wird das Ventilgehäuse 30 von einer zentralen Ausströmbohrung 36 durchgriffen, die konzentrisch zu der genannten Längsachse 38 im Ventilgehäuse 30 verläuft und die eine Art Tankanschluss T für die Rückführung des Fluids zu einem nicht näher dargestellten Vorratstank bildet, aber auch alternativ im Bedarfsfall für eine Druckzufuhr an eine Druckversorgungsquelle P (Hydropumpe) anschließbar ist.

Das Ventilgehäuse 30 mit den Einströmbohrungen 32, 34 und der Ausströmbohrung 36 ist mittels eines Ventilkolbens 40, der von dem in der Fig. 2 nur teilweise dargestellten Magnetsystem 18 ansteuerbar ist, miteinander fluidführend verbindbar oder voneinander trennbar. Der Ventilkolben 40 ist zumindest teilweise längsverfahrbar im Ventilgehäuse 30 geführt und weist an seiner in Blickrichtung auf die Fig. 2 gesehen, unteren freien Stirnseite eine Art Ventilkonus auf, der mit benachbarten Wandteilen des Ventilgehäuses 30 einen im geschlossenen Zustand des Ventils dicht schließenden Ventilsitz 42 ausbildet. Des Weiteren weist der Ventilkolben 40 zwei Blendenbohrungen auf, von denen die eine 44 als feste und die andere 46 als variable Blende ausgebildet ist. Es versteht sich, dass im Bedarfsfall auch mehrere feste Blenden 44 entlang des Außenumfanges am Ventilkolben 40 angebracht sein können, wohingegen die variable Blende 46 in radialer konzentrischer Ausrichtung zur Längsachse 38 den Ventilkolben in Richtung der Ausströmbohrung 36 fluidführend durchgreift. Dabei ist vorgesehen, dass der maximal mögliche Blendenquerschnitt der variablen Blende 46 im Durchmesser größer als der Durchmesser der festen Blende 44 bemessen ist. Beide Blenden 44, 46 sind vertieft im Ventilkolben 40 angeordnet, wobei die feste Blende 44 über eine Querbohrung in eine Ringnut 48 am Außenumfang des Ventilkolbens 40 ausmündet. In jeder Verfahrstellung des Ventilkolbens 40 übergreift dabei die Ringnut 48 die jeweilige Einströmöffnung 34 mit dem geringeren Durchmesser im Ventilgehäuse 30. In Axialrichtung des Ventilkolbens 40 und in koaxialer Anordnung zur Längsachse 38 ist an der freien Stirnseite des Ventilkolbens 40 eine Art Stufenbohrung 50 angeordnet, an die sich, einen Fluiddurchgang bildend, die variable Blende 46 anschließt.

Die variable Blende 46 wird von einer Steuerstange 52 angesteuert, die an ihrem einen freien Ende in Verlängerung eines Flachstücks 54 einen Steuerkegel 56 trägt, mit dem der freie Öffnungsquerschnitt der variablen Blende 46 vorgebbar ist. Der Steuerkegel 56 ist in seinem zylindrischen Übergangsteil zum Flachstück 54 von einer Druckfeder mit geringer Federsteifigkeit umgeben, die zur Vermeidung von Hemmungen im Betrieb versucht, den Steuerkegel 56 von dem Ventilkolben 40 abzuheben, um dergestalt die variable Blende 46 freizugeben.

Das Magnetsystem 18 weist einen in einem Polrohr 58 längsverfahrbar gelagerten Ankerkolben 22 respektive Magnetanker auf, der von der bestrombaren Magnetspule (nicht dargestellt) elektromechanisch betätigt, den Ventilkolben 40 von seinem Ventilsitz 42 abhebt und einen Fluidweg von Einström- zu Ausströmöffnungen 32, 34; 36 freigibt. Hierfür greift die Steuerstange 52 mit ihrem in Blickrichtung auf die Fig. 2 gesehenen, oberen freien Ende in einen Durchgang 60 als Hohlraum ein. Der Ankerkolben 22 ist von einer Längsbohrung 62 durchgriffen, der einen Fluidtransfer von seiner Vorder- auf seine Rückseite und umgekehrt ermöglicht. Das Polrohr 58 weist in üblicher Weise eine magnetische Trennung 64 auf, und in der in der Fig. 2 dargestellten Schließstellung des Ventiles, schließt die Oberkante des Ankerkolbens 22 bündig mit dem oberen inwärtigen Bereich der magnetischen Trennung 64 ab. Wie sich des Weiteren aus der Fig. 2 ergibt, ist das freie Ende der Steuerstange 52, das dem Steuerkegel 56 gegenüberliegt, mit einem vorgebbaren axialen Bewegungsspiel X im Magnetanker respektive Ankerkolben 22 längsverfahrbar geführt. Hierfür ist auf der Innenumfangsseite des Durchganges oder Hohlraumes 60 ein Sprengring 66 eingebracht, der von einer im Querschnitt reduzierten Mitnehmerstange als Teil der Steuerstange 52 durchgriffen ist, die insoweit eine tellerartige Verbreiterung 68 endseitig aufweist.

Ferner ist der Ankerkolben 22 über ein zusätzlich zu der Steuerstange 52 vorhandenes Gestängeteil 70 bewegbar, das aus einem druckbeaufschlagten Bereich des im Ventilgehäuse 30 und dem Polrohr 58 als weiterem Teil des Ventilkörpers 26 eingeschlossenen Fluidvolumens herausgeführt ist und dass entgegen der Wirkung des Energiespeichers, insbesondere in Form der Druckfeder 20 bewegbar ist. Das Gestängeteil 70 ist fest mit einem Federteller 72 verbunden, an dem sich der Energiespeicher in Form der Druckfeder 20 mit seinem unteren freien Ende abstützt. Der Federteller 72 ist einstückiger Bestandteil einer Hülse 74, die vom oberen Endbereich des stangenartigen Gestängeteils 70 gleichermaßen durchgriffen ist. Über eine Handhabe 76 lässt sich die Hülse 74 in der Art eines Spindeltriebes in einem Polkern 78 verfahren, wobei sich hierüber die Vorspannung der Druckfeder 20 einstellen lässt. Die Hülse 74 mit Federteller 72 weist kein Gewinde auf, sondern ist durch die Einstellschraube (bzw. -mutter) hindurchgeführt. Die Einstellung der Druckfeder erfolgt durch die in Fig. 2 mit 75 bezifferte Einstellmutter. Diese weist ein Außengewinde auf, das in ein Innengewinde des Polkerns 78 eingreift. Des Weiteren ist eine Verstellsicherung 77 vorgesehen. Der hülsenförmig ausgebildete Polkern 78 ist gleichfalls Bestandteil des Ventilkörpers 26 als Ganzes und das untere Ende des Polkerns 78 mündet in Richtung des Ankerkolbens 22 aus, wobei zum Festlegen des Polkerns 78 am Polrohr 58 eine Bördelverbindung 80 am oberen Abschlussende des Polrohres 58 dient. Das Gestängeteil 70 ist mit seinem unteren freien Ende im Ankerkolben 22 geführt, sodass eine Art Mitnehmersystem 82 gebildet ist, das insoweit eine Verbreiterung 84 im Ankerkolben 22 aufweist. Das untere freie Ende des insoweit verbreiterten Gestängeteils 70 geht als Bestandteil des Mitnehmersystems 82 in die tellerartige Verbreiterung 84 über, die im Durchgang 60 geführt ist und in der gezeigten Stellung des Ankerkolbens 22 ein axiales Bewegungsspiel Y gegenüber dem Magnetanker respektive Ankerkolben 22 aufweist. Ferner ist der im Querschnitt dünnere Stangenteil des Gestängeteils 70 durch ein Dichtungspaket 86 im Polkern 78 hindurchgeführt, das außenumfangsseitig von einem Dichtring umfasst ist, der insoweit die Abdichtung zwischen Polrohr 58 und Polkern 78 herstellt. Ferner ist wiederum eine Druckfeder mit geringer Federsteifigkeit vorgesehen, die sich für einen hemmnisfreien Betrieb mit ihrem oberen Ende am Dichtungspaket 86 und mit ihrem unteren Ende an der zuordenbaren Ausnehmung 88 im Ankerkolben 22 abstützt.

Wie die Fig. 2 betreffend die Schließstellung weiter zeigt, ist der Ankerkolben 22 an seinen beiden gegenüberliegenden Stirnseiten mit jeweils einem frei vorgebbaren Verfahrweg im Ankerraum 90 des Polrohres 58 längsverfahrbar geführt, wobei der axiale Abstand zu der unteren Abschlussseite des Polkernes 78 etwas größer als der darunter liegende Abstand zwischen der unteren Stirnwand des Ankerkolbens 22 und der absatzartig nach innen gezogenen Innenwand des Polrohres 58 gewählt ist, das nach unten hin in die absatzweise Verbreiterung des Ventilgehäuses 30 eingeschraubt ist. Dergestalt ist jedenfalls auch in der in der Fig. 2 gezeigten Schließstellung des Ventils eine fluidführende Verbindung über die obere Einströmbohrung 34, die Ringnut 48 sowie die sich anschließende feste Blende 44 und über die zylindrische Reduzierung der Steuerstange 52 nebst dem Flachstück 54 in einen Umfassungsraum 92 geschaffen, der im Polrohr 58 angeordnet von der Steuerstange 52 durchgriffen ist. Ausgehend von diesem Umfassungsraum 92 besteht eine weitere fluidführende Verbindung über den unteren Teil des Ankerraumes 90 sowie die Längsbohrung 62 im Ankerkolben 22 in Richtung des oberen Teils des Ankerraumes 90. Von dort wiederum ist eine Fluidverbindung über die Ausnehmung 88 im Ankerkolben 22 zu dem als Hohlraum dienenden Durchgang 60 im Ankerkolben 22 geschaffen, wobei die dahingehende entlang der Längsachse 38 verlaufende mittige Ausnehmung 88 parallel zur randseitig angeordneten Längsbohrung 62 des Ankerkolbens 22 verläuft.

Zum besseren Verständnis wird nunmehr die vorstehend beschriebene Ventilkonstruktion anhand ihrer Funktionsweise näher erläutert. Die neue erfinderische Lösung vereint, wie bereits dargelegt, die Funktion eines 2/2-Wege-Sitzventiles 14, mit der eines einstellbaren Druckbegrenzungsventiles 16, in dem dessen Druckfunktion übernommen in ein Ventilbauteil, d.h. unter Einsatz eines gemeinsamen Ventilkörpers 26, realisiert ist. Hierbei wird die mittels der Einstellmutter 75 mechanisch einstellbare Druckfeder 20 mit dem Ansteuerungssystem 18 des Ventilkolbens 40 des Sitzventiles 14 gekoppelt. Die in der Fig. 2 gezeigte Ventilkonstruktion setzt sich aus dem Ventilgehäuse 30 sowie dem Polrohr 58 und dem Polkern 78 zusammen, die in Hintereinanderanordnung als Ganzes den Ventilkörper 26 ausbilden. Der Ventilkörper 26 beinhaltet insoweit den Ventilkolben 40, welcher die Einström- bzw. Ausströmbohrungen 32, 34; 36 über eine Sitzgeometrie in Form des Ventilsitzes 42 voneinander trennen. Weiter ist der Ventilkolben 40 mit zwei Blendenbohrungen 44, 46 ausgestattet, wobei eine als feste 44 und die andere als variable Blende 46 vorgesehen ist. Letztere wird über die an der Führungs- oder Steuerstange 52 befindliche Kegelsitz-Geometrie in Form des Steuerkegels 56 in ihrem Öffnungsquerschnitt variiert.

Öffnet die variable Blende 46, etabliert sich ein über beide Blenden 44, 46 fließender Volumenstrom, der wiederum einen Druckabfall in Strömungsrichtung hinter der festen Blende 44 generiert. Unter der Voraussetzung eines sich einstellenden Gleichgewichtszustandes, der auf den Ventilkolben 40 einwirkenden Druckkräfte und der durch die Blenden 44, 46 fließenden Volumenströme folgt der Ventilkolben 40 der Steuerstange 52 in ihrer Bewegung nach oben hin und das Ventil kommt dadurch in seinen geöffneten Zustand. Darüber hinaus stellt sich ein Öffnungsquerschnitt an der variablen Blende 46 ein. Je nach Betätigungszustand erhält der Hydraulikzylinder 10 dann auf seiner Kolbenseite über die Anschlussstelle B ein Fluid vorgebbaren Druckes von Seiten der Druckversorgung P her, wobei dahingehend der Anschluss B an die Einströmbohrung 32 mit dem größeren Querschnitt im Ventilgehäuse 30 angeschlossen ist. Wird das hydraulische System jedoch drucklos gehalten, strömt über den Fluidanschluss B das Fluid auf der Kolbenseite des Zylinders 10 in Richtung des Tankanschlusses T und mithin zum Tank oder einer sonstigen Niedrigdruckquelle. Sowohl die Druckversorgung als auch die Abfuhr in Richtung Niederdruck erfolgt über die Anströmbohrung 36 entlang der freien Stirnseite des Ventilgehäuses 30.

Die Führungs- oder Steuerstange 52 wird über den im Polrohr 58 gelagerten Ankerkolben 22 elektromechanisch mittels des Magnetsystems 18 bewegt. Weiter kann der Ankerkolben 22 über ein zusätzliches, aus dem druckbeaufschlagten Bereich des im Ventil und im Polrohr 58 eingeschlossenen Fluidvolumens heraustretendes Gestängeteil 70 bewegt werden. Der Durchmesser dieses Gestängeteils 70 bildet hierbei eine druckwirksame Fläche p, deren Kraft entgegen der Druckfeder 20 wirkt.

Das Gestängeteil 70 ist, wie bereits ausgeführt, mechanisch fest mit dem Federteller 72 der Hülse 74 verbunden, auf den die Druckfeder 20 mit ihrer Druckkraft wirkt. Sie wirkt insoweit den beschriebenen auf dem Gestängeteil 70 lastenden Druckkräften entgegen, welches sich aus dem Systemdruck wie auch etwaig entstandenem Überdruck zusammensetzt. Überschreitet der auf die druckaktive Fläche (Kreisfläche) p des im Durchmesser reduzierten oberen Gestängeteils 70 wirkende Druck ein voreingestelltes Maß derart, betätigt diese den Ankerkolben 22 und damit die Steuerstange 52. Hierdurch wird zumindest die variable Blende 46 geöffnet und ein Abströmen der überschüssigen Fluidmenge gewährleistet. Kommt es also in der bereits angesprochenen Verrohrung 24 des hydraulischen Systems mit dem Hydraulikzylinder 10 ungewollt zu einer Druckerhöhung, beispielsweise durch eine Temperaturerhöhung aufgrund von Sonneneinstrahlung, und verbleibt das Sitzventil 14 ansonsten in seiner in der Fig. 2 gezeigten geschlossenen Stellung, kommt es aufgrund der bereits angesprochenen Fluidverbindung zu einem Druckanstieg auf die druckaktive Fläche p am oberen Stangenteil des Gestängeteils 70 mit Öffnen der variablen Blende 46, sodass sich temperaturbedingt durch zu hohen Druck ein Fluidvolumenstrom von der Einströmbohrung 34, die feste Blende 44 und über die freigegebene variable Blende 46 sowie die Stufenbohrung 50 in Richtung der Ausströmbohrung 36 so lange einstellt, bis durch entsprechenden Druckabfall an der druckaktiven Fläche p die variable Blende 46 mittels des Steuerkegels 56 der Steuerstange 52 erneut verschlossen wird. Über die insoweit realisierte Einstellschraube lässt sich dergestalt die Federkraft und somit der Öffnungsdruck für den beschriebenen Entlastungsvorgang einstellen.

Die im Normalbetrieb auftretenden Drücke bewirken ein Verfahren des Gestängeteils 70 sowie des Ankerkolbens 22, jedoch nicht in dem Maße, um die Führungs- oder Steuerstange 52 mit dem Steuerkegel 56 bewegen zu können. Die elektromechanische Betätigung des Ventils über das Magnetsystem 18 bleibt also in jedem Fall gewährleistet. Hierzu trägt mit bei, dass das Mitnehmersystem 82 die Bewegung des Ankerkolbens 22 nur in einer Verschiebungsrichtung zulässt, die vom Ventilsitz 42 abgekehrt ist.

Die Erwärmung des Fluids kann zu einer erheblichen Volumenausdehnung führen, wobei man den Volumenausdehnungskoeffizienten mit ca. 0,0007 [1/K] annimmt. Daraus ergibt sich eine Volumenzunahme von ${V}_{1} = {V}_{0} \left(1+0,0007\left[1/K\right]⋅ΔT\left[K\right]\right) .$

Mit der erfindungsgemäßen Kompensation realisiert durch ein einzelnes Ventil lassen sich dergestalt temperaturbedingte Volumenzunahmen in hydraulischen Arbeitskreisläufen sicher beherrschen und ein schädigender Druckaufbau begrenzen.

## Patentansprüche

1. Ventil, insbesondere in Form eines 2/2-Wege-Sitzventiles, wobei zur Realisierung einer thermischen Überdrucksicherung in einen gemeinsamen Ventilkörper (26) eine Druckbegrenzungsfunktion (28) integriert ist,
wobei der Ventilkörper (26) mindestens eine Einströmbohrung (32, 34) und eine Ausströmbohrung (36) aufweist, die mittels eines Ventilkolbens (40), der von einem Magnetsystem (18) ansteuerbar ist, miteinander fluidführend verbindbar oder voneinander trennbar sind,
wobei der Ventilkolben (40) zwei Blendenbohrungen (44, 46) aufweist, von denen die eine als feste (44) und die andere als variable Blende (46) ausgebildet ist, und
wobei das Magnetsystem (18) einen in einem Polrohr (58) längsverfahrbar gelagerten Ankerkolben (22) aufweist, der von einer bestrombaren Magnetspule elektromechanisch betätigt den Ventilkolben (40) von einem Ventilsitz (42) in einem Ventilgehäuse (30) als Teil des Ventilkörpers (26) über eine Steuerstange (52) abhebt und
einen Fluidweg von einer Einström- zu einer Ausströmbohrung (32; 36) freigibt,
wobei die variable Blende (46) von der Steuerstange (52) angesteuert ist, die an ihrem einen freien Ende einen Steuerkegel (56) aufweist, mit dem der freie Öffnungsquerschnitt der variablen Blende (46) vorgebbar ist, und
der Ankerkolben (22) über ein zusätzlich zu der Steuerstange (52) vorhandenes Gestängeteil (70) bewegbar ist, das aus einem druckbeaufschlagten Bereich des im Ventilgehäuse (30) und dem Polrohr (58) als weiterem Teil des Ventilkörpers (26) eingeschlossenen Fluidvolumens herausgeführt ist und das entgegen der Wirkung eines Energiespeichers, insbesondere in Form einer Druckfeder (20), bewegbar ist.

2. Ventil nach 1, **dadurch gekennzeichnet, dass** das Gestängeteil (70) mechanisch fest mit einem Federteller (72) verbunden ist, an dem sich der Energiespeicher in Form einer Druckfeder (20) mit einem freien Ende abstützt, und dass der Federteller (72) und die Druckfeder (20) in einem Polkern (78) als einem weiteren Teil des Ventilkörpers (26) aufgenommen sind, der sich in Verlängerung an das Polrohr (58) anschließt.

3. Ventil nach1 oder 2, **dadurch gekennzeichnet, dass** das Gestängeteil (70) an seinem einen freien Ende in ein im Ankerkolben (22) aufgenommenes Mitnehmersystem (82) übergeht, dessen freies Ende mit einem vorgebbaren axialen Bewegungsspiel (y) im Ankerkolben (22) längsverfahrbar aufgenommen ist.

4. Ventil nach einem der vorstehenden Ansprüche, **dadurch gekennzeichnet, dass** das freie Ende der Steuerstange (52), das dem Steuerkegel (56) gegenüberliegt, mit einem vorgebbaren axialen Bewegungsspiel (x) im Ankerkolben (22) längsverfahrbar geführt ist.

5. Hydraulisches System mit einem Ventil nach einem der vorstehenden Ansprüche, **dadurch gekennzeichnet, dass** an die jeweilige Einströmbohrung (32, 34) im Ventilkörper (26) mindestens ein Hydraulikzylinder (10) mit seiner Kolbenseite (B) einer Kolben-Stangen-Einheit (12) angeschlossen ist.

## Claims

1. Valve, in particular in the form of a 2/2-way directional poppet valve, wherein a pressure-limiting function (28) is integrated in a joint valve body (26) in order to implement thermal overpressure protection,
wherein the valve body (26) has at least one inflow hole (32, 34) and one outflow hole (36), which can be brought into fluid communication with each other or disconnected from each other by means of a valve piston (40) that can be actuated by a magnetic system (18),
wherein the valve piston (40) has two orifice holes (44, 46), one of which is formed as a fixed orifice (44) and the other as a variable orifice (46), and
wherein the magnetic system (18) has an armature piston (22) which is mounted in a pole tube (58) so as to be longitudinally movable and which, when electromechanically actuated by an energisable magnetic coil, lifts the valve piston (40) off a valve seat (42) in a valve housing (30), as a part of the valve body (26), by means of a control rod (52) and opens a fluid path from an inflow hole to an outflow hole (32; 36),
wherein the variable orifice (46) is actuated by the control rod (52), which, at one free end, has a control cone (56) by which the free opening cross section of the variable orifice (46) can be predetermined, and the armature piston (22) is movable by means of a linkage part (70), which is present in addition to the control rod (52) and which is led out of a pressurised area of the fluid volume enclosed in the valve housing (30) and the pole tube (58), as a further part of the valve body (26), and which is movable counter to the action of an energy accumulator, in particular in the form of a compression spring (20).

2. Valve according to claim 1, **characterised in that** the linkage part (70) is mechanically rigidly connected to a spring retainer (72) against which a free end of the energy accumulator in the form of a compression spring (20) is supported, and **in that** the spring retainer (72) and the compression spring (20) are housed in a pole core (78), as a further part of the valve body (26), which adjoins the pole tube (58) as an extension thereof.

3. Valve according to claim 1 or claim 2, **characterised in that**, at one free end, the linkage part (70) merges into a driver system (82) which is housed in the armature piston (22) and the free end of which is housed in the armature piston (22) in a longitudinally movable manner with a predeterminable axial clearance (y).

4. Valve according to any of the preceding claims, **characterised in that** the free end of the control rod (52) on the opposite side to the control cone (56) is guided in the armature piston (22) in a longitudinally movable manner with a predeterminable axial clearance (x).

5. Hydraulic system comprising a valve according to any of the preceding claims, **characterised in that** at least one hydraulic cylinder (10) is connected, by its piston side (B) of a piston-rod unit (12), to the relevant inflow hole (32, 34) in the valve body (26).

## Revendications

1. Soupape, en particulier sous la forme d'une soupape à siège à 2/2 voies, dans laquelle pour la réalisation d'une sécurisation thermique à la surpression, une fonction (28) de limitation de la pression est intégrée dans un corps (26) de soupape commun,
dans laquelle le corps (26) de la soupape a au moins un alésage (32, 34) d'entrée et un alésage (36) de sortie, qui, au moyen d'un piston (40) de soupape, lequel peut être commandé par un système (18) magnétique, peuvent communiquer fluidiquement l'un avec l'autre ou être séparés l'un de l'autre,
dans laquelle le piston (40) de la soupape a deux alésages (44, 46) d'écran, dont l'un est constitué sous la forme d'un écran (44) fixe et l'autre d'un écran (46) variable,
et dans laquelle le système (18) magnétique a un piston (22) d'induit, qui est monté avec possibilité de se déplacer longitudinalement dans un tube (58) polaire, et qui, actionné électromécaniquement par une bobine d'aimant pouvant être alimentée en courant, soulève par une barre (52) de commande le piston (40) de la soupape d'un siège (42) de la soupape dans un boîtier (30) de soupape comme partie du corps (26) de la soupape, et
dégage un trajet pour du fluide d'un alésage (32) d'entrée à un alésage (36) de sortie,
dans laquelle l'écran (46) variable est commandé par la barre (52) de commande, qui a, à l'une de ses extrémités libres, un cône (56) de commande, par lequel la section transversale d'ouverture libre de l'écran (46) peut être donnée à l'avance, et
le piston (22) d'induit peut être déplacé par une partie (70) de tringlerie présente supplémentairement à la barre (52) de commande, qui sort d'une partie soumise à la pression du volume de fluide enfermé dans le boîtier (30) de la soupape et le tube (58) polaire comme autre partie du corps (26) de la soupape, et qui peut être déplacée à l'encontre de l'effet d'un accumulateur d'énergie, en particulier sous la forme d'un ressort (20) de compression.

2. Soupape suivant 1, **caractérisée en ce que** la partie (70) de tringlerie est solidaire mécaniquement d'une coupelle (72) de ressort, sur laquelle l'accumulateur d'énergie s'appuie sous la forme d'un ressort (20) de compression ayant une extrémité libre et **en ce que** la coupelle (72) de ressort et le ressort (20) de compression sont logés comme autre partie du corps (26) de la soupape dans un noyau (78) polaire, qui est dans le prolongement du tube (58) polaire.

3. Soupape suivant 1 ou 2, **caractérisée en ce que** la partie (70) de tringlerie se transforme à l'une de ses extrémités libres en un système (82) d'entraînement, qui est logé dans le piston (22) d'enduit et dont l'extrémité libre est reçue, avec possibilité de se déplacer longitudinalement avec un jeu (y) de déplacement axial pouvant être donné à l'avance, dans le piston (22) d'induit.

4. Soupape suivant l'une des revendications précédentes, **caractérisée en ce que** l'extrémité libre de la barre (52) de commande, qui est opposée au cône (56) de commande, est guidée avec possibilité de se déplacer longitudinalement dans le piston (22) d'induit avec un jeu (x) de déplacement axial pouvant être donné à l'avance.

5. Système hydraulique comprenant une soupape suivant l'une des revendications précédentes, **caractérisé en ce que**, à l'alésage (32, 34) respectif d'entrée dans le corps (26) de la soupape, au moins un vérin (10) hydraulique est, par son côté (B) piston, raccordé à une unité (12) piston-tige.
